# DEMANDE DE BREVET EUROPEEN

(11) **EP 4 118 966 A1**
(43) Date de publication de la demande: **18.01.2023**
(21) Numéro de dépôt: 22185739.4
(22) Date de dépôt: 19.07.2022
(51) Int. Cl.: A01M 7/00, A01C 23/04, B05B 7/26

(54) **DISPOSITIF D'INCORPORATION POUR PULVERISATEUR AGRICOLE**

(30) Priorité: 16.07.2021 FR 2107702
(71) Demandeur: Exel Industries, 51200 Epernay (FR)
(72) Inventeur: PITAUD, Sylvain, 51200 EPERNAY (FR)
(74) Mandataire: Argyma

(57) **Abrégé**

L'invention concerne un dispositif d'incorporation (10) pour pulvérisateur agricole, comprenant une ouverture inférieure (11) s'étendant autour d'un premier axe (12) globalement vertical, une ouverture supérieure (13) s'étendant autour d'un deuxième axe (14) globalement vertical, et au moins une paroi latérale (15) reliant l'ouverture inférieure à l'ouverture supérieure, l'ouverture inférieure présentant une section plus petite que celle de l'ouverture supérieure, le dispositif d'incorporation présentant ainsi globalement une forme d'entonnoir, l'ouverture inférieure étant en outre définie par un goulot (16) apte à se connecter de manière réversible et étanche à un système de transfert étanche (200) pour le transfert d'un produit vers un circuit de liquide du pulvérisateur agricole auquel le système de transfert étanche est raccordé.

## Description

### DOMAINE TECHNIQUE

L'invention concerne un dispositif d'incorporation pour pulvérisateur agricole, un sous-ensemble comprenant un tel dispositif d'incorporation et un système de transfert étanche, ainsi qu'un ensemble comprenant un pulvérisateur agricole et un tel sous-ensemble.

### ÉTAT DE LA TECHNIQUE ANTÉRIEURE

Il est connu de l'art antérieur des systèmes de transfert étanche pour pulvérisateur agricole, aussi appelés « Closed Transfer System » en terminologie anglaise ou « CTS ». Ces systèmes de transfert étanche sont prévus pour transférer du produit d'un bidon à un circuit de liquide du pulvérisateur agricole de façon étanche, afin d'éviter qu'un agriculteur, manipulant le bidon, soit en contact avec le produit du bidon pendant le transfert. Pour cela, ils sont aptes à se connecter de manière réversible et étanche au goulot du bidon de produit, notamment au moyen d'un adaptateur.

Or, tous les bidons de produit ne sont pas compatibles avec les systèmes de transfert étanche, leur goulot n'étant par exemple pas adapté à une connexion avec le système de transfert étanche, notamment avec l'adaptateur. Les produits poudreux ou encore sous forme de grains sont par ailleurs rarement conditionnés sous forme de bidon.

Cela limite l'utilisation des systèmes de transfert étanche et peut obliger à multiplier les équipements embarqués sur le pulvérisateur agricole, notamment en prévoyant une trémie pour incorporer des produits poudreux ou des produits de bidon non conforme ou encore incompatible avec le système de transfert étanche. Il en résulte nécessairement une perte de compacité du pulvérisateur agricole.

### EXPOSÉ DE L'INVENTION

Afin de pallier ces problèmes, la présente invention a pour objet un dispositif d'incorporation pour pulvérisateur agricole, comprenant une ouverture inférieure s'étendant autour d'un premier axe globalement vertical, une ouverture supérieure s'étendant autour d'un deuxième axe globalement vertical, et au moins une paroi latérale reliant l'ouverture inférieure à l'ouverture supérieure, l'ouverture inférieure présentant une section, prise perpendiculairement au premier axe, qui est plus petite qu'une section, prise perpendiculairement au deuxième axe, de l'ouverture supérieure, le dispositif d'incorporation présentant ainsi globalement la forme d'un entonnoir, l'ouverture inférieure étant en outre définie par un goulot apte à se connecter de manière réversible et étanche à un système de transfert étanche pour le transfert d'un produit vers un circuit de liquide du pulvérisateur agricole auquel le système de transfert étanche est raccordé.

Selon des variantes de réalisation qui peuvent être prises ensemble ou séparément :
- le goulot comprend un filetage externe apte à coopérer avec un taraudage interne du système de transfert étanche ;
- un nombre de tours de filet du filetage externe du goulot est égal à 2.5 ;
- un pas de filet du filetage externe du goulot est égal à 4.23mm ;
- un diamètre de filet du filetage externe du goulot est égal à 63.5mm avec une tolérance de +0.25mm et -0.00mm;
- un diamètre externe de goulot du goulot est égal à 59.7mm avec une tolérance de +0.25mm et de -0.00mm;
- un espace libre s'étendant radialement autour du filetage externe du goulot est égal ou supérieur à 7mm ;
- un diamètre interne de goulot du goulot est égal ou supérieur à 53mm ;
- une hauteur de goulot est égale ou supérieure à 18mm ;
- un angle sous filet est égal à 10° avec une tolérance +/-1°30' ;
- une distance entre deux tours de filet du filetage externe du goulot est égale ou supérieure à 1.05mm ;
- un diamètre de sommet du goulot est égal à 57.7mm avec une tolérance de +1.00mm et
- 0.0mm;
- une ovalisation du goulot est égale ou inférieure à 0.3mm ;
- une planéité d'une surface d'un sommet du goulot présente des défauts inférieurs ou égaux à 0.2mm ;
- la ou l'une des parois latérales porte une conduite de rinçage de bidon qui traverse ladite paroi latérale, la conduite de rinçage de bidon comprenant une extrémité interne, qui est entourée par la ou les parois latérales et orientée vers l'ouverture supérieure, à l'opposé du goulot, et une extrémité externe qui est située à l'opposé de l'extrémité interne par rapport à la ou aux parois latérales et est apte à se connecter à un tuyau de rinçage ;
- l'ouverture supérieure est définie par un rebord formant un logement annulaire autour du deuxième axe, le logement accueillant une portion annulaire ajourée d'une conduite de rinçage de trémie, la conduite de rinçage de trémie comprenant en outre une portion d'alimentation reliée à la portion annulaire, traversant la ou l'une des parois latérales et apte à se connecter à un tuyau d'alimentation ;
- la ou les parois latérales sont venues de matière avec l'ouverture supérieure et le goulot, le dispositif d'incorporation formant ainsi un ensemble monobloc rigide ;
- la paroi latérale comprend une toile souple et des baleines ou tringles conçues pour tendre la toile en forme d'entonnoir ;
- la paroi latérale est conçue pour être pliable et dépliable.

L'invention concerne encore un sous-ensemble comprenant un dispositif d'incorporation tel que précédemment décrit et un système de transfert étanche apte à être raccordé à un circuit de liquide d'un pulvérisateur agricole, le goulot du dispositif d'incorporation étant conçu pour se connecter de manière réversible et étanche au système de transfert étanche. L'invention concerne aussi un ensemble comprenant un pulvérisateur agricole et un sous-ensemble tel que précédemment décrit, le pulvérisateur agricole comprenant un circuit de liquide raccordé au système de transfert étanche.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, données à titre d'exemple non limitatif, et faites en référence aux dessins annexés sur lesquels :
[Fig.1] est une vue schématique d'un pulvérisateur agricole comprenant un circuit de liquide connecté à un système de transfert étanche ;
[Fig.2] est une vue en coupe d'un dispositif d'incorporation pour pulvérisateur agricole selon un mode de réalisation de l'invention, lequel est connecté à un système de transfert étanche tel qu'illustré à la figure 1 ;
[Fig.3] est une vue de détail d'un goulot d'un dispositif d'incorporation selon un mode de réalisation de l'invention ;
[Fig.4] est une vue de détail, en coupe et partielle, du goulot du dispositif d'incorporation illustré à la figure 3.

### DESCRIPTION DETAILLEE

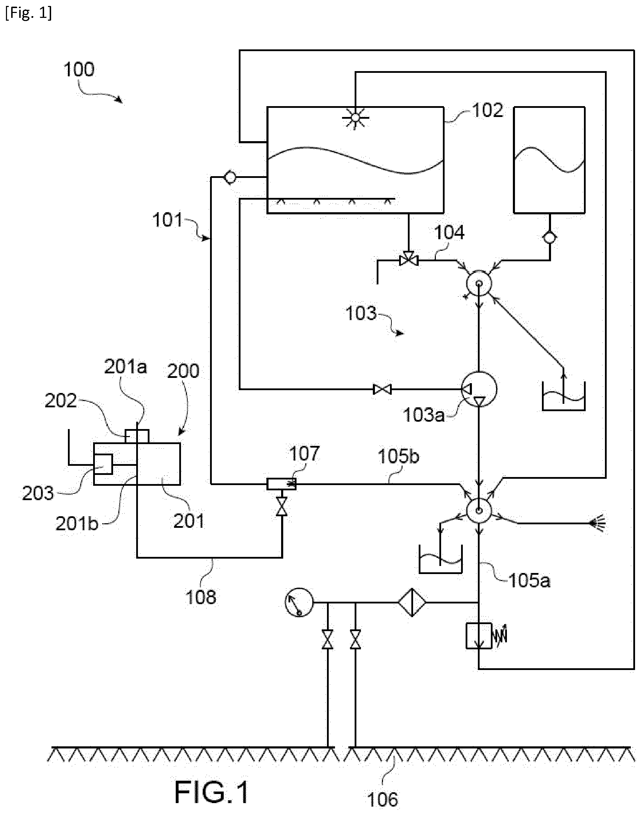

La figure 1 montre un pulvérisateur agricole 100 comprenant un circuit de liquide 101 comprenant lui-même une cuve principale 102, un ensemble de pompage 103, au moins une ligne d'aspiration 104 et au moins deux lignes de refoulement 105a, 105b.

L'ensemble de pompage 103 est conçu pour aspirer du liquide provenant de la ou l'une des lignes d'aspiration 104 pour le refouler vers l'une ou des lignes de refoulement 105a, 105b. A cet effet, il comprend notamment une pompe 103a.

La ou l'une des lignes d'aspiration 104 relie la cuve principale 102 à l'ensemble de pompage 103.

L'une 105a des lignes de refoulement 105a, 105b, dite ligne de pulvérisation, relie l'ensemble de pompage 103 à des buses de pulvérisation 106 pour pulvériser du liquide refoulé par l'ensemble de pompage 103 sur des végétaux à traiter d'un champ. Une autre 105b des lignes de refoulement 105a, 105b, dite ligne d'incorporation, relie l'ensemble de pompage 103 à la cuve principale 102. La ligne d'incorporation 105b comprend un mécanisme d'aspiration 107, tel qu'un dispositif à effet Venturi, conçu pour aspirer du produit provenant d'une voie d'incorporation 108, lorsque du liquide provenant de l'ensemble de pompage 103 circule le long de la ligne d'incorporation 105b. Le produit provenant de la voie d'incorporation 108 est ainsi incorporé au liquide provenant de l'ensemble de pompe 103 et circulant le long de la ligne d'incorporation 105b, de manière à alimenter la cuve principale 102 de ce liquide auquel le produit a été incorporé. La voie d'incorporation 108 est par exemple reliée à un système de transfert étanche 200, aussi appelé « Closed Transfer System » en anglais ou encore « CTS », qui peut être ou non embarqué à bord du pulvérisateur agricole 100. Le système de transfert étanche 200 est conçu pour transférer du produit d'un bidon au circuit de liquide 101 du pulvérisateur agricole 100 de façon étanche. Le système de transfert étanche 200 est notamment conforme à la norme ISO 21191 publiée le 26 février 2021.

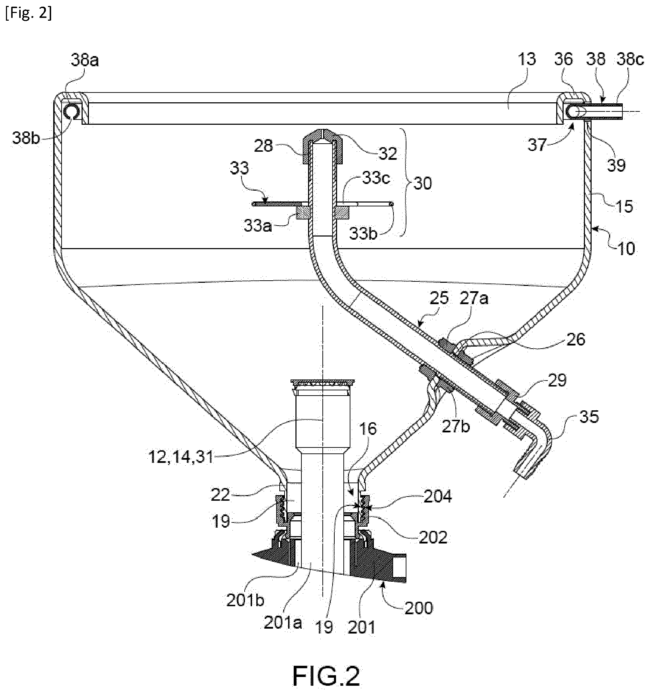

Pour cela, le système de transfert étanche 200 comprend par exemple un dispositif de transfert 201 connecté ou apte à se connecter au circuit de liquide 101 du pulvérisateur agricole 100, notamment à la voie d'incorporation 108, ainsi qu'un adaptateur 202 apte à raccorder, de manière réversible et étanche, un goulot du bidon de produit au dispositif de transfert 201 pour le transfert de produit du bidon vers le circuit de liquide 101 du pulvérisateur agricole 100, notamment vers la cuve principale 102 via la voie d'incorporation 108 et le mécanisme d'aspiration 107. Pour cela, l'adaptateur 202 est apte, d'une part, à se connecter de manière réversible et étanche au goulot du bidon, et d'autre part, à se connecter de manière réversible et étanche au dispositif de transfert 201. Le dispositif de transfert 201 est conçu pour autoriser le transfert de liquide du bidon vers le circuit de liquide 101 du pulvérisateur agricole 100, notamment en mettant en communication le bidon avec le circuit de liquide 101, lorsque l'adaptateur 202 raccorde de manière étanche le goulot du bidon au dispositif de transfert 201. Sur la figure 2 et sans que cela soit limitatif, le dispositif de transfert 201 comprend une canne extensible 201a conçue pour se déployer à l'intérieur du bidon et pour libérer un passage 201b vers le circuit de liquide 101, l'intérieur du bidon communiquant alors avec le circuit de liquide 101 via le passage 201b, lorsque la canne extensible 201a est déployée à l'intérieur du bidon. D'autres mécanismes peuvent être mis en œuvre par le système de transfert étanche 200 pour mettre en communication l'intérieur du bidon avec le circuit de liquide 101.

Le transfert étanche de produit assuré par le système de transfert étanche 200 permet ainsi d'éviter qu'il y ait un contact entre un agriculteur manipulant le bidon de produit et le produit transféré du bidon au circuit de liquide 101 du pulvérisateur agricole 100.

Le système de transfert étanche 200 peut aussi comprendre un dispositif de rinçage 203 pour le rinçage du bidon, lorsque le goulot du bidon est connecté de manière étanche au système de transfert étanche 200, notamment par l'intermédiaire de l'adaptateur 202. Sur la figure 2 et sans que cela soit limitatif, le dispositif de rinçage 203 comprend la canne extensible 201a qui est aussi conçue pour projeter un liquide de rinçage, tel que de l'eau claire, dans le bidon, lorsque la canne extensible 201a est déployée à l'intérieur du bidon. Le dispositif de rinçage 203 peut être connecté ou apte à être connecté à une source de liquide de rinçage, qui peut ou non être externe au pulvérisateur agricole 100.

La figure 2 montre un dispositif d'incorporation 10 pour pulvérisateur agricole 100 selon un mode de réalisation de l'invention.

Le dispositif d'incorporation 10 comprend une ouverture inférieure 11 s'étendant autour d'un premier axe 12 globalement vertical, une ouverture supérieure 13 s'étendant autour d'un deuxième axe 14 globalement vertical, qui peut être ou non confondu avec le premier axe 12, ainsi qu'au moins une paroi latérale 15 reliant l'ouverture inférieure 11 à l'ouverture supérieure 13. La ou les parois latérales 15 définissent ensemble l'intérieur du dispositif d'incorporation 10.

L'ouverture inférieure 11 présente par ailleurs une section, prise perpendiculairement au premier axe 12, qui est plus petite qu'une section, prise perpendiculairement au deuxième axe 14, de l'ouverture supérieure 13. Le dispositif d'incorporation 10 présente ainsi globalement la forme d'un entonnoir.

Selon l'invention, l'ouverture inférieure 11 est en outre définie par un goulot 16 apte à se connecter de manière réversible et étanche au système de transfert étanche 200, notamment à l'adaptateur 202 du système de transfert étanche 200.

Le dispositif d'incorporation 10 permet ainsi d'utiliser le système de transfert étanche 200 même lorsqu'un produit poudreux ou sous forme de grains ou un produit contenu dans un bidon non conforme ou incompatible avec le système de transfert étanche 200, notamment avec l'adaptateur 202 du système de transfert 200, doit être transféré. Le système de transfert étanche 200 fonctionne avec le dispositif d'incorporation 10 de la même manière que décrit ci-avant avec un bidon de produit conforme ou compatible avec le système de transfert étanche 200.

Grâce au dispositif d'incorporation 10, il est en outre possible de prévoir une ligne d'incorporation 105b du pulvérisateur agricole 100 sans trémie d'incorporation, qui serait embarquée sur le pulvérisateur agricole 100 et reliée au mécanisme d'aspiration 103, en parallèle du système de transfert étanche 200, pour l'incorporation de produit poudreux ou de produit contenu dans un bidon non conforme ou incompatible avec le système de transfert étanche 200. Cela représente un gain de volume et permet donc une meilleure compacité du circuit de liquide 101 du pulvérisateur agricole 100, notamment lorsque le système de transfert étanche 200 est embarqué sur le pulvérisateur agricole 100.

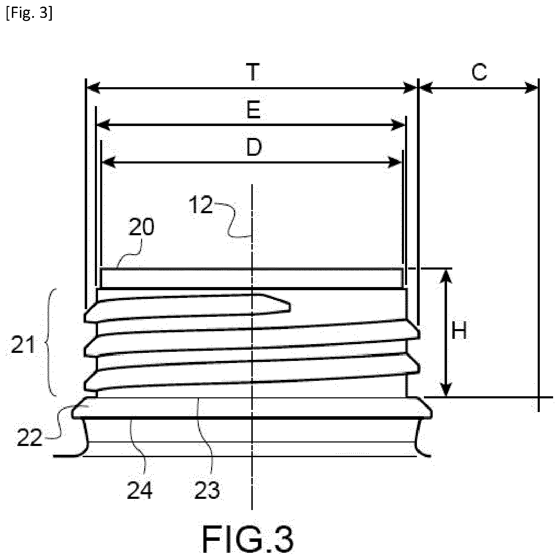

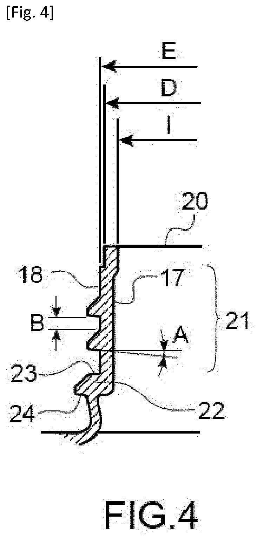

Un exemple de goulot 16 du dispositif d'incorporation 10 est montré plus en détail aux figures 3 et 4.

Le goulot 16 s'étend radialement autour du premier axe 12 et comprend une surface radiale interne 17 orientée vers le premier axe 12 et une surface radiale externe 18, opposée à la surface radialement interne 17 (figure 4). La surface radialement interne 17 est par exemple agencée parallèlement au premier axe 12.

Le goulot 16, notamment la surface radiale externe 18 du goulot 16, porte par exemple un filetage externe 19 apte à coopérer avec un taraudage interne 204 du système de transfert étanche 200, notamment de l'adaptateur 202 du système de transfert étanche 100 (figure 2), de manière à assurer une connexion étanche entre le goulot 16 et le système de transfert étanche 200.

Le goulot 16 peut en outre comprendre, successivement, suivant le premier axe 12, une extrémité libre 20, aussi appelée sommet, une portion filetée 21 portant le filetage externe 19, ainsi qu'une portion de raccord, par exemple formée d'une collerette 22, à partir de laquelle la ou les parois latérales 15 s'étendent (figures 3 et 4). Le sommet 20 du goulot 16 forme notamment une surface plane et perpendiculaire au premier axe 12. La collerette 22 fait par exemple radialement saillie depuis la surface radiale externe 18 du goulot 16. La collerette 22 comprend un sommet 23 relié à la portion filetée 21 et un talon 24 à partir duquel la ou les parois latérales 15, notamment une surface externe desdites parois latérales 15, s'étend. Le sommet 23 de la collerette 22 forme par exemple une surface plane et perpendiculaire au premier axe 12.

Le goulot 16 présente par exemple une ou plusieurs des caractéristiques suivantes :
- un nombre de tours de filet du filetage externe 19 du goulot 16 est égal à 2.5 ;
- un pas de filet du filetage externe 19 du goulot 16 est égal à 4.23mm ;
- un diamètre de filet T du filetage externe 19 du goulot 16 est égal à 63.5mm avec une tolérance de +0.25mm et -0.00mm (figure 3), le diamètre de filet T correspondant au diamètre externe du filet du filetage externe 19 du goulot 16 et est déterminé comme étant la moyenne de deux diamètres perpendiculaires, lesdits diamètres étant notamment mesurés hors soudure du goulot 16, c'est-à-dire hors d'un plan du joint de soudure du goulot 16 qui s'étend parallèlement au premier axe 12 ;

- un diamètre externe de goulot E du goulot 16 est égal à 59.7mm avec une tolérance de +0.25mm et de -0.00mm (figures 3 et 4), le diamètre externe de goulot E correspondant au diamètre externe de la portion filetée 21 du goulot 16, sans le filet, notamment de la surface radiale externe 18 au niveau de la portion filetée 21, et est déterminé comme étant la moyenne de deux diamètres perpendiculaires, lesdits diamètres étant notamment mesurés hors soudure du goulot 16, c'est-à-dire hors d'un plan du joint de soudure du goulot 16 qui s'étendrait parallèlement au premier axe 12 ;
- un espace libre C s'étendant radialement autour du filetage externe 19 du goulot 16 est égal ou supérieur à 7mm (figure 3) ;
- un diamètre interne de goulot I du goulot 16 est égal ou supérieur à 53mm (figure 4), le diamètre interne de goulot I correspondant au diamètre interne minimum du goulot 16, notamment de la surface radiale interne 17 du goulot 16, sur toute la hauteur du goulot 16;
- une hauteur de goulot H entre le sommet 20 du goulot 16 et le sommet 23 de la collerette 22 est égale ou supérieure à 18mm (figure 3), la hauteur de goulot H étant prise suivant le premier axe 12 ;
- un angle sous filet A est égal à 10° avec une tolérance +/-1°30' (figure 4), l'angle sous filet A correspondant à l'angle défini entre un plan perpendiculaire au premier axe 12 et une face du filet du filetage externe 19 du goulot 16 qui est orientée vers la collerette 22 ;
- une distance entre deux tours de filet B du filetage externe 19 du goulot 16 est égale ou supérieure à 1.05mm (figure 4), la distance entre deux tours de filet B correspondant à une distance entre deux tours consécutifs du filet du filetage externe 19 du goulot 16, prise au niveau de la surface radiale externe 18 du goulot 16 suivant le premier axe 12 ;
- un diamètre de sommet D du goulot 16 est égal à 57.7mm avec une tolérance de +1.00mm et -0.0mm (figures 3 et 4), le diamètre de sommet D correspondant à un diamètre externe du sommet 20 du goulot 16 ;
- une ovalisation du goulot 16 est égale ou inférieure à 0.3mm, l'ovalisation correspondant à une différence entre un diamètre minimum et un diamètre maximum du goulot 16, le diamètre minimum et le diamètre maximum pouvant être des diamètres internes ou des diamètres externes ou des diamètres du filet ;
- une planéité de la surface du sommet 20 du goulot 16 présente des défauts inférieurs ou égaux à 0.2mm.

La ou les parois latérales 15 sont par exemple venues de matière avec l'ouverture supérieure 13 et le goulot 16. Le dispositif d'incorporation 10 forme ainsi un ensemble rigide monobloc ou encore d'un seul tenant. Le dispositif d'incorporation 10 peut être réalisé à partir d'une matière plastique rigide, telle que du polyéthylène.

La ou l'une des parois latérales 15 porte par exemple une conduite de rinçage de bidon 25 qui traverse ladite paroi latérale 15, notamment au moyen d'un premier orifice 26 prévu dans ladite paroi latérale 25 à cet effet. La conduite de rinçage de bidon 25 peut en outre être équipée de bagues d'étanchéité 27a, 27b montées serrées autour de la conduite de rinçage de bidon 25 et agencées contre la paroi latérale 15, de chaque côté de celle-ci, afin d'éviter toutes fuites via le premier orifice 26.

La conduite de rinçage de bidon 25 peut aussi comprendre une extrémité interne 28 entourée par la ou les parois latérales 15 et une extrémité externe 29 située à l'opposé de l'extrémité interne 28 par rapport à la ou aux parois latérales 15. L'extrémité interne 28 est ainsi agencée à l'intérieur du dispositif d'incorporation 10, tandis que l'extrémité externe 29 est agencée à l'extérieur du dispositif d'incorporation 10.

La conduite de rinçage de bidon 25 peut encore comprendre une portion interne 30 entourée par la ou les parois latérales 15, et donc agencée à l'intérieur du dispositif d'incorporation 10, et s'étendant suivant un troisième axe 31 globalement vertical, qui peut être ou non confondu avec le premier et/ou le deuxième axe 12, 14. La portion interne 30 porte l'extrémité interne 28 de la conduite de rinçage de bidon 25, qui est orientée vers l'ouverture supérieure 13, à l'opposé du goulot 16, et peut être équipée d'une buse 32 pour projeter un liquide de rinçage, telle que de l'eau claire, dans un bidon à rincer enfilé autour de la portion interne 30 de la conduite de rinçage de bidon 25 par son extrémité interne 28. Un support ajouré 33, agencé perpendiculairement au troisième axe 31, entoure par exemple la portion interne 30 pour supporter le goulot du bidon à rincer, lorsqu'il est enfilé autour de la portion interne 30 de la conduite de rinçage de bidon 25 par son extrémité interne 28. Le support ajouré 33 est par exemple former d'une bague centrale 33a montée solidaire sur la portion interne 30 de la conduite de rinçage de bidon 25, notamment par vissage, et sur laquelle un anneau 33b concentrique est fixé par l'intermédiaire de rayons 33c. L'anneau 33b et les rayons 33c sont par exemple formés de fils en acier inoxydable. L'extrémité externe 29 de la conduite de rinçage de bidon 25 est par exemple apte à se connecter à un tuyau de rinçage (non représenté) pour alimenter la conduite de rinçage de bidon 25 en liquide de rinçage. A cet effet, l'extrémité externe 29 peut être pourvue d'un connecteur hydraulique d'alimentation 35.

L'ouverture supérieure 13 du dispositif d'incorporation 10 est par exemple définie par un rebord 36 formant un logement 37 annulaire, circulaire ou polygonal, autour du deuxième axe 14 et orienté vers l'intérieur du dispositif d'incorporation 10 et vers le goulot 16. Le logement 37 peut accueillir une portion annulaire 38a ajourée d'une conduite de rinçage de trémie 38, de forme complémentaire du logement 37. La portion annulaire 38a de la conduite de rinçage de trémie 38 présente par exemple une pluralité de perforations 38b, notamment orientées vers le goulot 16, pour rincer la ou les parois latérales 15 à l'intérieur du dispositif d'incorporation 10. Les perforations 38b peuvent être remplacées par une ou plusieurs encoches ou une ou plusieurs rainures, par exemple une unique rainure annulaire, circulaire ou polygonal. La conduite de rinçage de trémie 38 peut en outre comprendre une portion d'alimentation 38c reliée à la portion annulaire 38a et traversant la ou l'une des parois latérales 15, notamment au moyen d'un deuxième orifice 39, pour être alimentée en liquide de rinçage, notamment via un tuyau d'alimentation (non représenté).

En variante (non représentée), la paroi latérale 15 comprend une toile souple et des baleines ou tringles conçues pour tendre la toile en forme d'entonnoir. La toile souple est par exemple réalisée à partir d'un élastomère, tel que du caoutchouc, ou de polychlorure de vinyle. La paroi latérale 15 est montée solidaire avec le goulot 16 rigide, par exemple par collage, par vissage, par bridage, par soudure ou encore par sertissage. La paroi latérale 15 peut en outre être pliable et dépliable, notamment au moyen de baleines formant ressorts et tendant à déplier la toile souple en forme d'entonnoir. Les baleines ou tringles peuvent sinon être montées pivotantes entre elles, notamment autour d'axes de pivotement orientés circonférentiellement par rapport à la direction verticale, entre une position pliée dans laquelle les baleines ou tringles sont rabattues les unes sur les autres et une position dépliée dans laquelle les baleines ou tringles donnent à la paroi latérale 15 sa forme d'entonnoir. Un mécanisme de blocage et de déblocage des baleines ou tringles peut aussi être prévu pour bloquer les baleines ou tringles en position dépliée, et ainsi donner à la paroi latérale 15 sa forme d'entonnoir, et pour débloquer les baleines ou tringles de leur position dépliée, et ainsi autoriser leur pivotement entre la position dépliée et la position pliée. Les baleines ou tringles pivotantes et le mécanisme de blocage et de déblocage forment ainsi un système de supports rigides pliables et dépliables.

Le dispositif d'incorporation 10 décrit ci-avant est particulièrement avantageux car il permet d'utiliser le système de transfert étanche 200 en toutes circonstances, même lorsqu'un produit poudreux ou sous forme de grains ou un produit contenu dans un bidon non conforme ou incompatible avec le système de transfert étanche 200, doit être transféré au circuit de liquide 101 du pulvérisateur agricole 100.

## Revendications

1. Dispositif d'incorporation (10) pour pulvérisateur agricole (100), comprenant une ouverture inférieure (11) s'étendant autour d'un premier axe (12) globalement vertical, une ouverture supérieure (13) s'étendant autour d'un deuxième axe (14) globalement vertical, et au moins une paroi latérale (15) reliant l'ouverture inférieure (11) à l'ouverture supérieure (13), l'ouverture inférieure (11) présentant une section, prise perpendiculairement au premier axe (12), qui est plus petite qu'une section, prise perpendiculairement au deuxième axe (14), de l'ouverture supérieure (13), le dispositif d'incorporation (10) présentant ainsi globalement la forme d'un entonnoir,
le dispositif d'incorporation (10) étant caractérisé en que l'ouverture inférieure (11) est définie par un goulot (16) apte à se connecter de manière réversible et étanche à un système de transfert étanche (200) pour le transfert d'un produit vers un circuit de liquide (101) du pulvérisateur agricole (100) auquel le système de transfert étanche (200) est raccordé.

2. Dispositif d'incorporation (10) selon la revendication 1, dans lequel le goulot (16) comprend un filetage externe (19) apte à coopérer avec un taraudage interne (204) du système de transfert étanche (200).

3. Dispositif d'incorporation (10) selon la revendication 2, dans lequel :
- un nombre de tours de filet du filetage externe (19) du goulot (16) est égal à 2.5 ; et/ou
- un pas de filet du filetage externe (19) du goulot (16) est égal à 4.23mm ; et/ou
- un diamètre de filet (T) du filetage externe (19) du goulot (16) est égal à 63.5mm avec une tolérance de +0.25mm et -0.00mm ; et/ou
- un diamètre externe de goulot (E) du goulot (16) est égal à 59.7mm avec une tolérance de +0.25mm et de -0.00mm ; et/ou
- un espace libre (C) s'étendant radialement autour du filetage externe (19) du goulot (16) est égal ou supérieur à 7mm ; et/ou
- un diamètre interne de goulot (I) du goulot (16) est égal ou supérieur à 53mm ; et/ou
- une hauteur de goulot (H) est égale ou supérieure à 18mm ; et/ou
- un angle sous filet (A) est égal à 10° avec une tolérance +/-1°30' ; et/ou
- une distance entre deux tours de filet (B) du filetage externe (19) du goulot (16) est égale ou supérieure à 1.05mm ; et/ou
- un diamètre de sommet (D) du goulot (16) est égal à 57.7mm avec une tolérance de +1.00mm et -0.0mm ; et/ou
- une ovalisation du goulot (16) est égale ou inférieure à 0.3mm ; et/ou
- une planéité d'une surface d'un sommet (20) du goulot (16) présente des défauts inférieurs ou égaux à 0.2mm.

4. Dispositif d'incorporation (10) selon l'une des revendications 1 à 3, dans lequel la ou l'une des parois latérales (15) porte une conduite de rinçage de bidon (25) qui traverse ladite paroi latérale (15), la conduite de rinçage de bidon (25) comprenant une extrémité interne (28), qui est entourée par la ou les parois latérales (15) et orientée vers l'ouverture supérieure (13), à l'opposé du goulot (16), et une extrémité externe (29) qui est située à l'opposé de l'extrémité interne (28) par rapport à la ou aux parois latérales (15) et est apte à se connecter à un tuyau de rinçage.

5. Dispositif d'incorporation (10) selon l'une des revendications 1 à 4, dans lequel l'ouverture supérieure (13) est définie par un rebord (36) formant un logement (37) annulaire autour du deuxième axe (14), le logement (37) accueillant une portion annulaire (38a) ajourée d'une conduite de rinçage de trémie (38), la conduite de rinçage de trémie (38) comprenant en outre une portion d'alimentation (38c) reliée à la portion annulaire (38a), traversant la ou l'une des parois latérales (15) et apte à se connecter à un tuyau d'alimentation.

6. Dispositif d'incorporation (10) selon l'une des revendications 1 à 5, dans lequel la ou les parois latérales (15) sont venues de matière avec l'ouverture supérieure (13) et le goulot (16), le dispositif d'incorporation (10) formant ainsi un ensemble monobloc rigide.

7. Dispositif d'incorporation (10) selon l'une des revendications 1 à 5, dans lequel la paroi latérale (15) comprend une toile souple et des baleines ou tringles conçues pour tendre la toile en forme d'entonnoir.

8. Dispositif d'incorporation (10) selon la revendication 7, dans lequel la paroi latérale (15) est conçue pour être pliable et dépliable.

9. Sous-ensemble comprenant un dispositif d'incorporation (10) selon l'une des revendications 1 à 8 et un système de transfert étanche (200) apte à être raccordé à un circuit de liquide (101) d'un pulvérisateur agricole (100), le goulot (16) du dispositif d'incorporation (100) étant conçu pour se connecter de manière réversible et étanche au système de transfert étanche (200).

10. Ensemble comprenant un pulvérisateur agricole (100) et un sous-ensemble selon la revendication 9, le pulvérisateur agricole (100) comprenant un circuit de liquide (101) raccordé au système de transfert étanche (200).
